**Europäisches Patentamt**

**European Patent Office**

**Office européen des brevets**

(19)

(11) Numéro de publication : **0 337 848 B1**

(12)

# FASCICULE DE BREVET EUROPEEN

(45) Date de publication du fascicule du brevet :
**10.06.92 Bulletin 92/24**

(51) Int. Cl.⁵ : **F16K 1/46,** F16K 11/16,
F15B 13/042

(21) Numéro de dépôt : **89400896.0**

(22) Date de dépôt : **31.03.89**

(54) **Valve pneumatique double, en particulier pour avertisseur à air comprimé.**

(30) Priorité : **01.04.88 FR 8804373**

(43) Date de publication de la demande :
**18.10.89 Bulletin 89/42**

(45) Mention de la délivrance du brevet :
**10.06.92 Bulletin 92/24**

(84) Etats contractants désignés :
**BE DE GB IT LU**

(56) Documents cités :
**DE-B- 1 262 089**
**FR-A- 1 185 668**
**FR-A- 1 242 720**
**GB-A- 445 704**

(56) Documents cités :
**GB-A- 1 104 639**
**GB-A- 2 136 540**
**US-A- 2 417 494**
**US-A- 2 431 437**
**US-A- 3 408 041**

(73) Titulaire : **Forges de Belles Ondes**
**8, rue Blanche**
**F-75009 Paris (FR)**

(72) Inventeur : **Faubeau Edmond**
**1, rue Gaetan Pirou**
**95580 Andilly (FR)**

(74) Mandataire : **Michardière, Bernard et al**
**C/O CABINET PEUSCET 68, rue d'Hauteville**
**F-75010 Paris (FR)**

EP 0 337 848 B1

Jouve, 18, rue Saint-Denis, 75001 PARIS

## Description

L'invention est relative à une valve pneumatique double, et concerne plus particulièrement, mais non exclusivement, une valve pneumatique destinée à un avertisseur à air comprimé à deux tons, tels que ceux utilisés sur les trains

L'invention a pour but, surtout, de fournir une valve pneumatique double qui soit d'un encombrement réduit tout en assurant une étanchéité excellente et fiable, afin de minimiser la consommation de fluide sous pression.

US-A-2 431 437 montre une valve pour fluide, en particulier valve pneumatique, comprenant un clapet porté par une tige montée coulissante dans un corps de valve, qui comporte un siège contre lequel le clapet est propre à s'appliquer sous l'action de moyens de rappel élastiques, l'ouverture du clapet pouvant être assurée à l'aide d'un organe de commande agissant sur la tige de la valve, le clapet comportant un joint torique pour réaliser une étanchéité axiale contre le siège, ce joint torique étant enfermé dans une gorge tandis qu'une coupelle est montée sur la tige de valve, du côté opposé au siège,cette coupelle étant munie d'un rebord cylindrique propre à coiffer le joint torique et formant une couronne pour le maintenir sur sa périphérie extérieure, le joint torique étant propre à venir en appui axial contre une face transversale à l'axe de la tige, et le siège du clapet étant situé du côté de l'arrivée du fluide sous pression, de sorte que ce clapet est. sollicité à la fermeture par la pression, des moyens de rappel élastiques comprenant un ressort en hélice disposé entre la coupelle et le fond d'une chambre recevant le fluide sous pression, la coupelle étant en butée axiale contre un épaulement de la tige de valve. Le siège du clapet est situé du côté de l'arrivée du fluide sous pression de sorte que ce clapet est sollicité à la fermeture par la pression

Une telle solution est intéressante pour la réalisation de l'étanchéité, mais il s'agit d'un clapet simple et aucun enseignement n'est fourni pour réaliser une valve double de faible encombrement

DE-B-1 262 089 montre une valve plus spécialement destinée à des liquides. Un orifice d'admission du fluide sous pression débouche dans une chambre fermée par un tiroir, qui peut être comparé à un clapet, propre à coulisser dans un alésage de diamètre constant ; ce tiroir est muni d'une portée tronconique qui assure la fermeture en venant en appui contre un siège correspondant. Un canal de départ, orienté transversalement par rapport à l'axe de l'orifice d'admission, est prévu pour le raccordement à un appareil d'utilisation. Un autre tiroir, commandé par le même levier que le premier tiroir, est prévu pour établir une liaison entre le canal d'utilisation et l'échappement du fluide. Cet autre tiroir est agencé pour jouer le rôle d'une soupape de sécurité en s'ouvrant en cas de surpression, grâce à une différence de section de la portée tronconique venant en appui contre le siège et de l'extrémité opposée de ce tiroir.

Il est clair que ce document DE-B-1 262 089 ne concerne pas une valve double puisqu'un seul canal d'utilisation ou orifice de sortie est prévu. Les deux plongeurs, d'axes parallèles, prévus dans le corps de valve n'ont pas les mêmes fonctions puisque l'un commande l'admission du fluide sous pression dans le canal d'utilisation, alors que l'autre assure l'échappement. En outre, le plongeur affecté à l'échappement est agencé de manière différente de celui affecté à l'admission.

Pour atteindre les buts indiqués précédemment, l'invention prévoit une structure de valve pneumatique double dans laquelle l'étanchéité, au niveau d'un clapet, est obtenue à l'aide d'un joint torique, par appui axial contre un siège, d'une manière semblable à US-A-2 431 437, mais dans laquelle, en outre, on prévoit des moyens permettant d'être sûr que le joint torique vient en contact contre son siège, et un agencement permettant de réduire l'encombrement de la valve tout en assurant une commande de deux orifices de sortie

Selon l'invention, une valve pneumatique double comprend deux clapets identiques d'axes parallèles, disposés côte à côte, un corps de valve comportant une entrée centrale de fluide sous pression qui comprend un alésage sécant avec deux chambres contenant les deux clapets, et deux sorties communiquant avec les chambres, l'entrée centrale et les deux sorties débouchant toutes dans une même face du corps, chacune de ces chambres comprenant des moyens de rappel élastiques et un siège contre lequel le clapet est propre à s'appliquer sous l'action des moyens de rappel élastiques, chaque clapet étant porté par une tige montée coulissante dans le corps de vanne, l'ouverture du clapet étant assurée à l'aide d'un organe de commante agissant sur la tige de la valve, chaque clapet comportant un joint torique pour réaliser une étanchéité axiale contre le siège, ce joint torique étant enfermé dans une gorge tandis qu'une coupelle est montée sur la tige de valve, du côté opposé au siège, cette coupelle étant munie d'un rebord cylindrique propre à coiffer le joint torique et formant une couronne pour le maintenir sur sa périphérie extérieure, le joint torique étant propre à venir en appui axial contre une face transversale à l'axe de la tige, et le siège du clapet étant situé du côté de l'arrivée du fluide sous pression, de sorte que ce clapet est sollicité à la fermeture par la pression, un jeu étant prévu en fin de course de fermeture entre l'organe de commande et l'extrémité voisine de chaque tige de la valve pour permettre d'assurer la venue en contact du joint torique de chaque clapet contre son siège, et l'organe de commande comprenant une manette pouvant être basculée et un balancier commandé par ladite manette et qui agit, par basculement, alternativement sur chaque tige de clapet, les plans de basculement de la manette et du balancier étant parallèles et décalés l'un par rapport à l'autre.

La disposition centrale de l'orifice d'admission qui est sécant avec les chambres, d'axe orthogonal, des clapets permet de réduire l'encombrement du corps de valve ; la commande par balancier des tiges de clapet contribue également à reduire l'encombrement de l'ensemble qui présente une bonne fiabilité en ce qui concerne l'étanchéité grâce au jeu prévu en fin de course de fermeture.

Les moyens de rappel élastiques comprennent, de préférence, un ressort en hélice disposé entre la coupelle et le fond d'une chambre recevant le fluide sous pression, la coupelle étant en butée axiale contre un épaulement de la tige de valve.

Avantageusement, un contact électrique est associé à la valve et ce contact est disposé avec son poussoir dans le plan de basculement de la manette commandant le balancier, tandis que le corps de valve est déporté par rapport à ce plan, le balancier prévu pour agir sur les tiges des clapets étant porté par un manchon cylindrique engagé sur un arbre traversé orthogonalement, ainsi que le manchon, par une tige de la manette, ledit contact étant commandé simultanément avec les clapets.

L'extrémité de la tige de manette propre à commander le contact électrique est située à proximité de l'axe de basculement de cette manette, et un dispositif multiplicateur de course est prévu entre l'extrémité de la tige de manette et le poussoir du contact pour amplifier le mouvement de ladite extrémité. Cette extrémité de la tige de manette est munie, de préférence, d'un galet, propre à appuyer contre le dispositif multiplicateur de course, ce dernier comprenant un levier articulé sur un axe parallèle à l'axe de basculement de la manette, le levier du dispositif multiplicateur comprenant une surface de came concave en V contre laquelle est propre à agir le susdit galet.

Le dispositif multiplicateur de course comprend, de préférence, un second levier articulé sur un axe parallèle à celui du premier levier, mais situé du côté opposé par rapport à la position moyenne de la manette, ce second levier présentant une surface concave coudée dont le creux est en appui contre une extrémité du premier levier, le second levier appuyant par son extrémité extérieure contre le poussoir du contact.

Le dispositif multiplicateur est agencé pour assurer une commande symétrique du poussoir du contact suivant que la manette est déplacée dans un sens ou dans l'autre. Pour cela, avantageusement, le premier levier présente une face extérieure de référence qui, en position moyenne de la manette, n'est pas orthogonale à la direction de coulissement du poussoir du contact, la surface de came en V étant symétrique par rapport à la droite orthogonale à cette face et qui passe par le sommet du V.

Avantageusement, la valve double pneumatique est montée sur un avertisseur à air comprimé, à deux tons, chaque clapet étant associé à un ton, respectivement aigu et grave.

L'invention consiste, mises à part les dispositions exposées ci-dessus, en un certain nombre d'autres dispositions dont il sera plus explicitement question ci-après à propos d'un mode de réalisation particulier décrit avec référence aux dessins ci-annexés, mais qui n'est nullement limitatif.

La figure 1, de ces dessins, est une vue en élévation d'une valve double pneumatique, conforme à l'invention.

La figure 2 est une coupe suivant la ligne II-II figure 3.

La figure 3 est une vue arrière par rapport à la figure 1.

La figure 4, enfin, est une coupe suivant la ligne IV-IV figure 3.

En se reportant aux dessins, on peut voir une valve double pneumatique 1 composée de deux valves élémentaires 1a, 1b identiques.

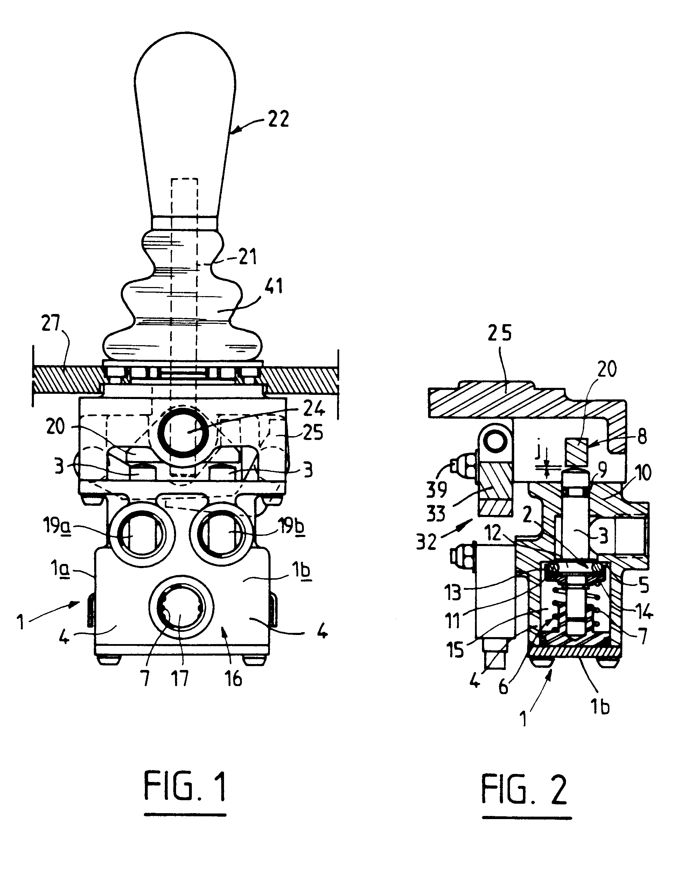

La valve 1b, bien visible sur la figure 2, comprend un clapet 2 porté par une tige 3 montée coulissante dans un corps de valve 4 qui comporte un siège 5 contre lequel le clapet 2 est propre à s'appliquer sous l'action de moyens de rappel élastiques 6 constitués par un ressort en hélice 7.

L'ouverture du clapet 2 peut être assurée à l'aide d'un organe de commande 8 propre à agir sur la tige 3 de la valve qui traverse, de manière étanche, grâce à une bague 9, la paroi 1Ø du corps de valve.

Le clapet 2 comporte un joint torique 11 pour réaliser une étanchéité axiale contre le siège 5. Ce joint 11 est enfermé dans une gorge 12 prévue sur une partie de plus fort diamètre de la tige 3. Le joint 11 est maintenu par une couronne cylindrique 13 qui prend appui sur sa périphérie extérieure, le joint 11 étant propre à venir en appui axial contre une face transversale à l'axe de la tige, cette face constituant le siège 5. Ce dernier est situé du côté de l'arrivée du fluide sous pression de sorte que la pression contribue à accentuer la fermeture du clapet. Le joint 11 est donc d'autant plus étanche que la pression est grande.

La couronne 13 est formée par le rebord cylindrique d'une coupelle 14 montée coulissante sur la tige de valve du côté au siège 5 et maintenue par un jonc ou circlip. Le ressort 7 est prévu entre cette coupelle et le fond de la chambre 15 dans laquelle est admis le fluide sous pression.

La coupelle 14 et son rebord 13 ne laissent apparaître qu'environ le quart de la surface du joint torique et permettent de ne pas amoindrir l'élasticité du joint, tout en évitant tout décollement du joint 11 de la gorge 12 qui pourrait être provoqué par la vitesse de l'air se détendant.

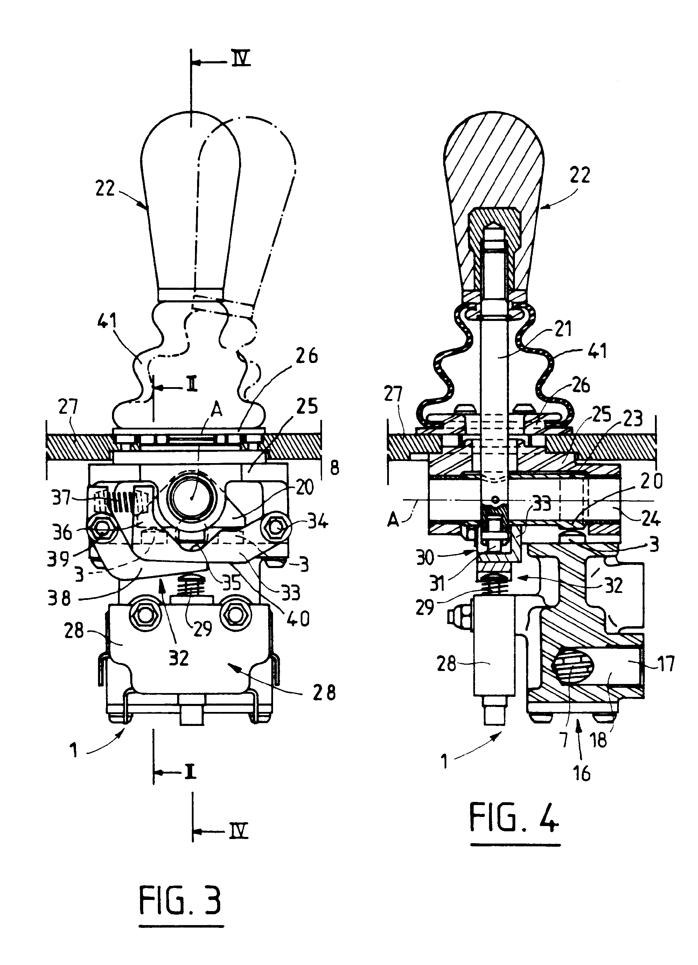

Comme visible sur la figure 1, les corps 4 des deux valves 1a, 1b forment un seul bloc 16 comprenant un orifice central d'admission 17 (voir figure 4) qui débouche dans une chambre médiane d'alimentation 18, sécante avec les deux chambres latérales 15 contenant les clapets 12. De préférence, la chambre 18 est cylindrique et a son axe orthogonal à celui des autres chambres cylindriques 15, dont les axes sont parallèles, de même que ceux des tiges 3 des deux clapets.

Sur la figure 1, on peut voir les deux orifices de sortie 19a, 19b, de la valve double, situés du côté de chaque siège 5 opposé au clapet 2.

Dans une application particulière d'une telle valve double à la commande d'un avertisseur à air comprimé, à deux tons, les orifices 19a, 19b sont reliés respectivement à l'avertisseur grave, et à l'avertisseur aigu ou inversement. La communication entre les trois chambres grâce à des trous sécants permet un faible encombrement et une fabrication aisée.

Comme visible sur la figure 2, un jeu j est prévu, en fin de course de fermeture, entre l'organe de commande 8 et l'extrémité voisine de la tige 3 de la valve pour permettre d'assurer la venue en contact du joint torique 11 contre le siège 5.

L'organe de commande 8, prévu pour commander alternativement les tiges parallèles 3 des deux clapets de la valve double, comprend un balancier 20, dont le contour a sensiblement la forme d'un triangle isocèle, lié en rotation à une tige 21 de manette 22. Le balancier est solidaire d'un manchon cylindrique 23 engagé sur un arbre 24 monté rotatif dans une embase 25 fixée, par une bride 26, sur une plaque-support 27, par exemple appartenant à un tableau de bord.

Comme visible sur la figure 1, le bloc 16 est fixé sous l'embase 25 du côté opposé à la plaque 27.

La commande manuelle se fait par l'intermédiaire de la manette 22 et de la tige 21 qui peuvent basculer de sorte que leur axe se déplace dans un plan orthogonal à l'arbre 24, en entraînant, dans ce mouvement de bascule, le balancier 20.

Comme visible sur la figure 4, le corps de valve 16 et le balancier 20 sont déportés, suivant une direction parallèle à l'axe géométrique de l'arbre 24, par rapport au plan de basculement de la manette 22.

Un contact électrique 28, muni d'un poussoir de commande 29, est associé à la valve pour être commandé simultanément avec les clapets. Ce contact 28 est décalé, par rapport au corps de valve 16, comme visible sur la figure 4, de sorte que le poussoir 29 du contact ait son axe situé dans le plan de basculement de la manette 22 et de la tige 21. L'extrémité 30 de la tige 21, propre à commander le contact électrique 28, est située à proximité de l'axe géométrique de rotation A, dans le but de réduire l'encombrement de l'ensemble. Cette extrémité 30 est munie, de préférence, d'un galet rotatif 31.

Un dispositif multiplicateur de course 32 est prévu entre l'extrémité 30 de la tige de manette et le poussoir 29 du contact pour amplifier le mouvement de ladite extrémité 30. Le dispositif multiplicateur de course 32 comprend un premier levier 33 articulé sur un axe 34 parallèle à l'axe de basculement A de la manette 22, mais déporté transversalement.

Le levier 33 comporte une surface de came 35 concave en V contre laquelle est propre à agir le galet, la pointe du V étant tournée du côté opposé à la manette 22. La section transversale du levier 33, comme visible sur la figure 4, a de préférence une forme en L, au niveau de la came en V, de manière à avoir une rigidité suffisante. Le levier 33 se prolonge par une branche 36 recourbée sensiblement à angle droit du côté de l'arbre 24 opposé à l'axe d'articulation 34. Un ressort de rappel 37 est prévu.

Le dispositif multiplicateur 32 comprend un second levier 38 articulé sur un axe 39 parallèle à l'axe 34 du premier levier mais situé du côté opposé par rapport au balancier 20. Ce second levier 38 a une forme coudée et sa partie concave reçoit l'angle convexe formé au niveau du retour 36 du premier levier. La face supérieure de ce levier 38 s'appuie sous le levier 33 et l'extrémité du levier 38 éloignée de l'axe 39 appuie, par sa face extérieure inclinée contre le poussoir 29.

Le ressort 37 est comprimé entre l'extrémité de la branche recourbée 36 et une extrémité du levier 38 située au-delà de l'axe 39, de manière à assurer le rappel des deux leviers.

La face extérieure de référence 40 du levier 33, en position moyenne de la manette 22, n'est pas orthogonale à la direction de coulissement du poussoir 29, comme visible d'après la figure 3, de manière à permettre, avec une surface 35 de came en V symétrique par rapport à une droite orthogonale à cette face 40, et qui passe par le sommet du V, d'assurer une commande symétrique du poussoir 29, que la manette 22 se déplace d'un côté ou de l'autre par rapport à sa position moyenne.

De préférence, un soufflet 41 dont la base est fixée sur la bride 26 est prévu pour entourer la tige 21 jusqu'à la poignée de la manette 22.

Ceci étant, l'utilisation et le fonctionnement de la valve sont les suivants.

En faisant basculer la manette 22 dans un sens ou dans l'autre, depuis sa position moyenne, on provoque l'enfoncement du clapet 2 correspondant et l'alimentation en air comprimé d'une des sorties 19a, 19b et donc l'alimentation de l'avertisseur associé, pour l'exemple considéré.

Le déplacement vertical (selon l'exemple considéré) de l'extrémité 30 de la tige 21 est inférieur à la course nécessaire du poussoir 29 pour provoquer le basculement du contact interrupteur 28. L'amplification introduite par la coopération du galet 31 et de la surface de came 35 et par la coopération des leviers 33 et 38 permet d'obtenir l'amplitude de déplacement souhaitée. Le déplacement du galet 31 dans le V provoque une première multiplication du mouvement.

Une seconde multiplication est due au rapport des distances entre l'articulation 34 du premier levier et d'une part, l'extrémité convexe arrondie du levier 33 qui appuie contre le creux du levier 38, et, d'autre part, le point de contact entre le galet 31 et le V.

Un troisième multiplication intervient en raison du rapport des distances entre l'articulation 39 du deuxième levier et, d'une part, le point d'attaque du poussoir 29, et d'autre part, la partie concave de ce second levier en appui contre l'extrémité arrondie du premier levier 33.

La valve conforme à l'invention permet d'obtenir une étanchéité absolue. Le ressort de rappel 7 permet le maintien en position du clapet 2 même en l'absence de fluide sous pression.

Cette valve reste d'un encombrement réduit, tout en étant d'une grande robustesse, pour des débits d'air comprimé à 8 bars de l'ordre de 2∅ litres/seconde.

La valve pourrait être utilisée pour d'autres fluides, ainsi qui pour d'autres applications.

**Revendications**

1. Valve pneumatique double comprenant deux clapets (2) identiques d'axes parallèles, disposés côte à côte, un corps (4) de valve comportant une entrée centrale (17) de fluide sous pression qui comprend un alésage (18) sécant avec deux chambres (15) contenant les deux clapets, et deux sorties (19a, 19b) communiquant avec les chambres, l'entrée centrale (17) et les deux sorties (19a, 19b) débouchant toutes dans une même face du corps (4), chacune de ces chambres comprenant des moyens de rappel élastiques (6) et un siège (5) contre lequel le clapet est propre à s'appliquer sous l'action des moyens de rappel élastiques, chaque clapet étant porté par une tige (3) montée coulissante dans le corps de vanne, l'ouverture du clapet étant assurée à l'aide d'un organe de commande (8) agissant sur la tige de la valve, chaque clapet (2) comportant un joint torique (11) pour réaliser une étanchéité axiale contre le siège (5), ce joint torique (11) étant enfermé dans une gorge (12) tandis qu'une coupelle (14) est montée sur la tige (3) de valve, du côté opposé au siège (5), cette coupelle (14) étant munie d'un rebord cylindrique (13) propre à coiffer le joint torique (11) et formant une couronne pour le maintenir sur sa périphérie extérieure, le joint torique (11) étant propre à venir en appui axial contre une face transversale à l'axe de la tige, et le siège (5) du clapet étant situé du côté de l'arrivée du fluide sous pression, de sorte que ce clapet est sollicité à la fermeture par la pression, un jeu (j) étant prévu en fin de course de fermeture entre l'organe de commande (8) et l'extrémité voisine de chaque tige (3) de la valve pour permettre d'assurer la venue en contact du joint torique (11) de chaque clapet contre son siège, et l'organe de commande (8) comprenant une manette (22) pouvant être basculée et un balancier (20) commandé par ladite manette (22) et qui agit pas basculement, alternativement sur chaque tige (3) de clapet, les plans de basculement de la manette (22) et du balancier (20) étant parallèles et décalés l'un par rapport à l'autre.

2. Valve selon la revendication 1, caractérisée par le fait que les moyens de rappel élastiques (6) comprennent un ressort en hélice (7) disposé entre la coupelle (14) et le fond d'une chambre (15) recevant le fluide sous pression, la coupelle (14) étant en butée axiale contre un épaulement de la tige (3) de valve.

3. Valve selon la revendication 1 ou 2, caractérisée par le fait qu'un contact électrique (28) est associé à la valve et par le fait que le contact (28) est disposé avec son poussoir (29) dans le plan de basculement de la manette (22) commandant le balancier (20), tandis que le corps de valve (4, 16) est déporté par rapport à ce plan, le balancier (20) prévu pour agir sur les tiges (3) des clapets étant porté par un manchon (23) cylindrique engagé sur un arbre (24) traversé orthogonalement, ainsi que le manchon, par une tige (21) de la manette, ledit contact étant commandé simultanément avec les clapets.

4. Valve selon la revendication 3, caractérisée par le fait que l'extrémité (30) de la tige de manette propre à commander le contact électrique (28) est située à proximité de l'axe de basculement (A) de cette manette, et un dispositif multiplicateur de course (32) est prévu entre l'extrémité (30) de la tige de manette et le poussoir (29) du contact pour amplifier le mouvement de ladite extrémité.

5. Valve selon la revendication 4, caractérisée par le fait que l'extrémité (30) de la tige de manette est munie d'un galet (31) propre à appuyer contre le dispositif multiplicateur de course (32), ce dernier comprenant un levier (33) articulé sur un axe (34) parallèle à l'axe de basculement (A) de la manette, le levier (33) du dispositif multiplicateur comprenant une surface de came concave en V (35) contre laquelle est propre à agir le susdit galet (31).

6. Valve selon la revendication 5, caractérisée par le fait que le dispositif multiplicateur de course (32) comprend un second levier (38) articulé sur un axe (39) parallèle à celui du premier levier, mais situé du côté opposé par rapport à la position moyenne de la manette (22), ce second levier (38) présentant une surface concave coudée dont le creux est en appui contre une extrémité du premier levier (33), le second levier (38) appuyant par son extrémité extérieure contre le poussoir (29) du contact.

7. Valve selon la revendication 5 ou 6, caractérisée par le fait que le dispositif multiplicateur (32) est agencé pour assurer une commande symétrique du poussoir (29) du micro-contact (28) suivant que la manette (22) est déplacée dans un sens ou dans l'autre.

8. Valve selon la revendication 7, caractérisée par le fait que le premier levier (33) présente une face extérieure de référence (40) qui, en position moyenne de la manette (22), n'est pas orthogonale à la direction de coulissement du poussoir (29) du contact, la surface de came en V étant symétrique par rapport à la droite orthogonale à cette face (40), qui passe par le sommet du V.

9. Valve double pneumatique selon l'une des revendications 1 à 8, caractérisée par le fait qu'elle est montée sur un avertisseur à air comprimé, à deux tons, chaque clapet (2) étant associé à un ton, respectivement aigu et grave.

**Patentansprüche**

1. Pneumatisches Doppelventil mit zwei, seitlich nebeneinander angeordneten, identischen klappen (2) mit parallelen Achsen, einem Ventilkörper (4) bestehend aus einem Zentraleingang (17) für Druckfluid, welcher eine Bohrung (18), die sich mit zwei, die zwei klappen beinhaltenden Kammern (15) schneidet, aufweist, und zwei, mit den Kammern in Verbindung stehenden Ausgängen (19a, 19b), wobei der Zentraleingang (17) und die beiden Ausgänge (19a, 19b) alle in eine selbe Fläche des Körpers (4) münden, wobei jede dieser Kammern elastische Rückholvorrichtungen (6) und einen Sitz (5) aufweisen, auf den die Klappe unter Einwirkung der elastischen Rückholvorrichtungen aufbringbar ist, wobei jede Klappe von einer im Ventilkörper verschiebbar angeordneten Stange (3) getragen wird, wobei das Öffnen der Klappe mittels eines Steuerorgans (8), welches auf die Ventilstange einwirkt, sichergestellt ist, wobei jede klappe (2) eine wulstförmige Dichtung (11) zur axialen Abdichtung gegenüber dem Sitz (5) aufweist, und diese wulstförmige Dichtung (11) in einer Vertiefung (12) eingeschlossen ist, während eine Schale (14) auf der Ventilstange (3) auf der gegenüberliegenden Seite des Sitzes (5) angebracht ist, wobei diese Schale (14) mit einem zylindrischen Rand (13) ausgestattet ist, welcher die wulstförmige Dichtung (11) überdeckt und eine Krone bildet, so daß diese auf ihrem äußeren Umfang gehalten wird, wobei die wulstförmige Dichtung (11) axial gegen eine zur Achse der Stange querliegende Fläche andrückbar ist, und der Sitz (5) der klappe auf der Seite des einströmenden Druckfluids liegt, so daß diese klappe durch Druck zum Schließen gebracht wird, wobei ein Spiel (j) in der Schließ-Endstellung vorgesehen ist und zwar zwischen dem Steuerorgan (8) und dem benachbarten Ende jeder Ventilstange (3), damit die wulstförmigen Dichtung (11) jeder klappe mit ihrem Sitz in Kontakt treten kann, wobei das Steuerorgan (8) einen schwenkbaren Bedienungshebel (22) und einen durch den genannten Bedienungshebel (22) betätigten Schwenkhebel (20) aufweist, der durch Schwenken wirkt, abwechselnd auf jede Stange (3) der klappe, wobei die Schwenkebenen des Bedienungshebels (22) und des Schwenkhebels (20) parallel und zueinander versetzt sind.

2. Ventil nach Anspruch 1, dadurch gekennzeichnet, daß die elastischen Rückholeinrichtungen (6) eine schraubenförmige Feder (7) aufweisen, welche zwischen der Schale (14) und dem Boden einer Kammer (15) angebracht ist, welche das Druckfluid aufnimmt, wobei die Schale (14) axial gegen einen Ansatz der Ventilstange (3) anschlägt.

3. Ventil nach Anspruch 1 oder 2, dadurch gekennzeichnet, daß ein elektrischer Kontakt (28) dem Ventil zugeordnet ist und dadurch, daß der Kontakt (28) mit seinem Druckteil (29) in der Schwenkebene des den Schwenkhebel (20) betätigenden Bedienungshebels (22) angebracht ist, während der Ventilkörper (4, 16) zu dieser Ebene verschoben ist, wobei der Schwenkhebel (20), welcher zur Einwirkung auf die Stangen (3) der klappen vorgesehen ist, von einer zylindrischen Hülse (23) getragen wird, die auf einer senkrechten Spindel (24) angebracht ist, die, ebenso wie die Hälse, von einer Stange (21) des Bedienungshebels (22) orthogonal durchdrungen wird, wobei der genannte Kontakt gleichzeitig mit den klappen angesteuert wird.

4. Ventil nach Anspruch 3, dadurch gekennzeichnet, daß das Ende (30) der Bedienungshebelstange zur Steuerung des elektrischen Kontakts (28) benachbart zur Schwenkachse (A) dieses Bedienungshebels gelegen ist, und ein Hubmultiplikator (32) zwischen dem Ende (30) der Bedienungshebelstange und dem Druckteil (29) des Kontakts zur Verstärkung der Bewegung des genannten Endes vorgesehen ist.

5. Ventil nach Anspruch 4, dadurch gekennzeichnet, daß das Ende (30) der Bedienungshebelstange mit einer Rolle (31) zum Andruck gegen den Hubmultiplikator (32) ausgestattet ist, wobei letzterer einen auf einer zur Schwenkachse (A) des Bedienungshebels parallelen Achse (34) schwenkbeweglich angebrachten Hebel (33) aufweist, wobei der Hebel (33) des Hubmultiplikators eine konkave, V-förmige Nockenfläche (35) aufweist, auf welche die obengenannte Rolle (31) wirkt.

6. Ventil nach Anspruch 5, dadurch gekennzeichnet, daß der Hubmultiplikator (32) einen zweiten Hebel (38) aufweist, der schwenkbeweglich auf einer zur Achse des ersten Hebels parallelen Achse (39) angebracht ist, jedoch auf der in Bezug auf die Mittelstellung des Bedienungshebels (22) gegenüberliegenden Seite liegt, wobei dieser zweite Hebel (38) eine konkave, abgewinkelte Fläche aufweist, deren Auskehlung gegen ein Ende des ersten Hebels (33) drückt, wobei der zweite Hebel (38) mit seinem äußeren Ende gegen das Druckteil (29) des Kontakts andrückt.

7. Ventil nach Anspruch 5 oder 6, dadurch gekennzeichnet, daß der Multiplikator (32) so angebracht ist, daß er eine symmetrische Bedienung des Drückers (29) des Mikrokontakts (28) je nach der Bewegung des Bedienungshebels (22) in die eine oder andere Richtung ermöglicht.

8. Ventil nach Anspruch 7, dadurch gekennzeichnet, daß der erste Hebel (33) eine äußere Bezugsfläche (40) aufweist, die bei Mittelstellung des Bedienungshebels (22) nicht senkrecht zur Gleitrichtung des Druckteils (29) des Kontakts ist, wobei die V-förmige Nockenfläche symmetrisch in Bezug auf die senkrechte Linie dieser Fläche (40) ist, welche durch die Spitze des V's verläuft.

9. Pneumatisches Doppelventil nach einem der Ansprüche 1 bis 8, dadurch gekennzeichnet, daß es auf einem Zwei-Ton-Druckluft-Signalgerät angebracht ist, wobei jede klappe (2) einem Ton, einem hohem bzw. tiefem, zugeordnet ist.

## Claims

1. Pneumatic double valve including two identical flap valves (2) with parallel axes, arranged side by side, a valve body (4) comprising a central pressurised fluid inlet (17) which includes a bore (18) intersecting with two chambers (15) containing the two flap valves, and two outlets (19a, 19b) communicating with the chambers, wherein the central inlet (17) and the two outlets (19a, 19b) all open into the same face of the body (4), each of these chambers includes elastic return means (6) and a seat (5) to which the flap valve is adapted to be applied under the action of the elastic return means, each flap valve is carried by a stem (3) mounted slidingly in the valve body, opening of the flap valve is ensured by means of a control member (8) acting on the valve stem, each flap valve (2) comprises an O-ring (11) to provide axial sealing against the seat (5), this O-ring (11) is enclosed in a groove (12) while a cup (14) is mounted on the valve stem (3), on the opposite side to the seat (5), this cup (14) is provided with a cylindrical rim (13) adapted to cover the O-ring (11) and forming a collar for holding it on its outer periphery, the O-ring (11) is adapted to abut axially against a face transverse to the axis of the stem, and the flap valve seat (5) is situated on the pressurised fluid input side, so that this flap valve is biassed into closing by pressure, a clearance (j) is provided at the end of the closing stroke between the control member (8) and the adjacent end of each valve stem (3) in order to make it possible to ensure that the O-ring (11) of each flap valve comes into contact with its seat, and the control member (8) includes an operating lever (22) capable of being tilted and a rocker (20) controlled by said operating lever (22) and acting, by tilting, alternately on each flap valve stem (3), the tilt planes of the operating lever (22) and of the rocker (20) being parallel to and offset from each other.

2. Valve according to claim 1, characterised in that the elastic return means (6) include a helical spring (7) arranged between the cup (14) and the bottom of a chamber (15) receiving the pressurised fluid, the cup (14) abutting axially against a shoulder of the valve stem (3).

3. Valve according to claim 1 or 2, characterised in that an electrical contact (28) is associated with the valve and in that the contact (28) is arranged with its push button (29) in the tilt plane of the operating lever (22) controlling the rocker (20), while the valve body (4, 16) is offset from this plane, the rocker (20) provided for acting on the flap valve stems (3) being carried by a cylindrical sleeve (23) engaged on an orthogonally traversed shaft (24), as the sleeve is carried by a rod (21) of the operating lever, said contact being controlled simultaneously with the flap valves.

4. Valve according to claim 3, characterised in that the end (30) of the rod of the operating lever adapted to control the electrical contact (28) is situated close to the tilt axis (A) of this operating lever, and a stroke increasing device (32) is provided between the end (30) of the operating lever rod and the push button (29) of the contact for amplifying the movement of said end.

5. Valve according to claim 4, characterised in that the end (30) of the operating lever rod is provided with a roller (31) adapted to bear on the stroke increasing device (32), the latter including a lever (33) hinged on an axis (34) parallel to the tilt axis (A) of the operating lever, the lever (33) of the stroke increasing device including a concave V-shaped cam surface (35) on which the aforesaid roller (31) is adapted to act.

6. Valve according to claim 5, characterised in that the stroke increasing device (32) includes a second lever (38) hinged on an axis (39) parallel to that of the first lever, but situated on the opposite side in relation to the middle position of the operating lever (22), this second lever (38) comprising a bent concave surface, the recess of which abuts against one end of the first lever (33), the second lever (38) bearing by its outer end on the push button (29) of the contact.

7. Valve according to claim 5 or 6, characterised in that the stroke increasing device (32) is arranged so as to ensure symmetrical control of the push button (29) of the microcontact (28) according as the operating lever (22) is displaced in one direction or the other.

8. Valve according to claim 7, characterised in that the first lever (33) comprises an outer reference face (40) which, in the middle position of the operating lever (22), is not orthogonal to the direction of sliding of the push button (29) of the contact, the V-shaped cam surface being symmetrical to the straight line orthogonal to this face (40) and passing through the apex of the V.

9. Pneumatic double valve according to any of claims 1 to 8, characterised in that it is mounted on a two-tone compressed air horn, each flap valve (2) being associated with one tone, respectively high and low.

FIG. 1

FIG. 2

FIG. 3

FIG. 4